# EUROPEAN PATENT SPECIFICATION

(11) **EP 2 777 953 B1**
(45) Date of publication and mention of the grant of the patent: **30.05.2018**
(21) Application number: 14157988.8
(22) Date of filing: 06.03.2014
(51) Int. Cl.: B60C 11/11, B60C 9/08, B60C 15/00

(54) **Motorcycle tire for uneven terrain**
Motorradreifen für unebenes Gelände
Pneu de motocyclette pour terrains non uniformes

(30) Priority: 15.03.2013 JP 2013052584; 15.01.2014 JP 2014005275
(43) Date of publication of application: 17.09.2014
(73) Proprietor: Sumitomo Rubber Industries, Ltd., Kobe-shi, Hyogo 651-0072 (JP)
(72) Inventor: Yuze, Toshifumi, Kobe-shi,, Hyogo 651-0072 (JP)
(74) Representative: TBK

(56) References cited:
- EP-A1- 1 992 502
- EP-A1- 2 610 078
- JP-A- 2004 142 533

## Description

### BACKGROUND OF THE INVENTION

### Field of the Invention

The present invention relates to motorcycle tires suitable for running on uneven terrain.

### Description of the Related Art

In uneven terrain such as mountain forests and wilderness, a road surface is uneven. A motorcycle running on the road surface repeats jumping and landing. The impact received at the time of landing by each motorcycle tire (hereinafter, referred to as tire) mounted on the motorcycle is great. During running on uneven terrain, the tire receives a great load with high frequency as compared to during running on a general public road. For the tire, impact absorbability and stiffness that withstands a great load are desired. As the tire for motorcycle, a tire including a carcass having a radial structure (a radial tire) has been examined. The impact absorbability and the stiffness of the tire are superior to those of a tire including a carcass having a bias structure (a bias tire).

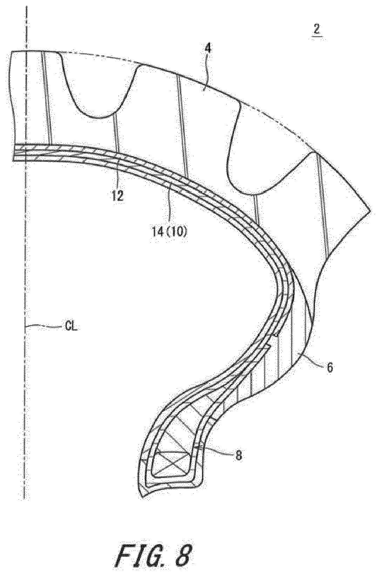

FIG. 8 is a cross-sectional view of a portion of a conventional motorcycle tire 2 for uneven terrain. The tire 2 includes a tread 4 formed from a crosslinked rubber; sidewalls 6 extending from both ends of the tread 4; a pair of beads 8; a carcass 10 extending on and between both beads 8; and a band 12 laminated on the carcass 10. The band 12 includes a band cord which is helically wound along a circumferential direction. The band 12 has a jointless structure. The band 12 having a jointless structure contributes to improvement of the stiffness of the tread 4. The tire 2 including the band 12 is excellent in traction performance. The carcass 10 is formed of a carcass ply 14 which is turned up around each bead 8 from the inner side to the outer side in the axial direction. In the tire 2, each turned-up end of the carcass ply 14 is located inward of an outer end of the tread 4 in the radial direction and inward of the sidewall 6 in the axial direction.

A load caused by a great load that occurs during running on uneven terrain is concentrated at each sidewall 6. During running on uneven terrain, each sidewall 6 repeatedly deforms. In the tire 2 in which each end of the carcass ply 14 is located inward of the sidewall 6 in the axial direction, a load caused by the deformation is concentrated at each end of the carcass ply 14, and separation is likely to occur. Tires for which the structure of a carcass ply is examined in light of separation are disclosed in JP 10-305712 A, JP 05-008615 A, and JP 2006-076385 A.

Tires for which overlap of a carcass ply and a band is examined in light of ensuring desired stiffness of sidewalls are disclosed in JP 2 821 022 A, JP 4 912 668 A (US 2007/0102089 A), JP 2005-001629 (US2004/0250938 A), and JP 4 319 278 A.

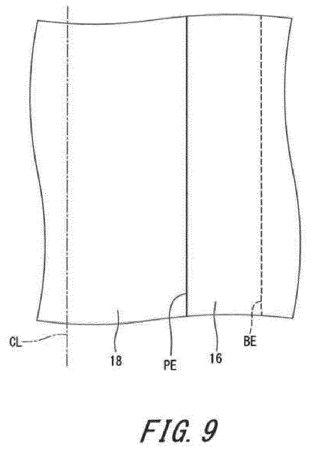

FIG. 9 shows a portion of a tire in which end portions of a carcass ply 16 overlap end portions of a band 18. The band 18 has a jointless structure. In FIG. 9, an alternate long and short dash line CL represents the equator plane of the tire, a broken line BE represents an end of the band 18, and a straight line PE represents an end of the carcass ply 16. In the tire, the boundary between the region of the band 18 that is overlapped by the end portion of the carcass ply 16 and the region of the band 18 that is not overlapped by the end portion of the carcass ply 16 is substantially straight. In FIG. 9, the direction of the boundary line is substantially the same as the direction of a band cord. The stiffness of the tire is greatly different between both sides of the boundary line. When the tire receives a great load, the band 18 bends near the boundary line. The bending of the band 18 causes inappropriate deformation of the tire. Excessive deformation of the tire leads to fatigue of a carcass or a crack of a tread surface. The tire is poor in durability. In addition, excessive deformation of the tire impairs handling stability.

EP 1 992 502 A1 discloses a motorcycle tire according to the preamble of claim 1.

JP 2004 142 533 A and EP 2 610 078 A1 likewise relate to the structure of motorcycle tires.

An object of the present invention is to provide a motorcycle tire for uneven terrain which is excellent in durability and handling stability.

### SUMMARY OF THE INVENTION

A motorcycle tire for uneven terrain according to the present invention includes: a tread; a pair of beads; a carcass extending on and between one of the beads and the other of the beads, and along the tread and inward of the tread in a radial direction; and a band laminated on the carcass and located inward of the tread in the radial direction. The tread includes a large number of blocks which stand substantially outward in the radial direction. The carcass includes a carcass ply which is turned up around each bead. The carcass ply includes a main portion which extends from an equator plane toward each bead; and a pair of turned-up portions which extend from the main portion substantially outward in the radial direction. The band includes a band cord which is helically wound along a circumferential direction. In the tire, an end portion of the turned-up portion and an end portion of the band overlap each other at an inner side, in the radial direction, of the tread.
In the tire according to the present invention, a position of an end of the turned-up portion varies in the circumferential direction.

When a distance between the end of the turned-up portion and an end of the band is indicated by d and an average of a maximum value and a minimum value of the distance d is set as an amount of overlap L of the end portion of the band and the end portion of the turned-up portion, a ratio (L/D) of the amount of overlap L relative to a width D, in an axial direction, of the band is preferably equal to or greater than 1/12 but equal to or less than 1/6.

When a position on the end of the turned-up portion at which a distance d between the end of the turned-up portion and an end of the band is at its maximum is a point A1 and a position on the end of the turned-up portion which is adjacent to the point A1 and at which the distance d is at its minimum is a point A2, an angle θ of a straight line obtained by connecting the point A1 to the point A2, relative to the circumferential direction, is preferably equal to or greater than 15° but equal to or less than 60°.

Preferably, the end portion of the turned-up portion is located outward of the end portion of the band in the radial direction.

Preferably, a distance W between the end of the turned-up portion and an intersection K of the band and a straight line obtained by extending an inner side surface, in an axial direction, of a block which stands at an outermost portion in the axial direction is equal to or greater than 2 mm.

When positions at which all side surfaces of a block standing at an outermost portion in the axial direction intersect the band or the turned-up portion when being extended substantially inward in the radial direction are indicated as a virtual line, apositiononthe end of the turned-up portion at which the distance d is at its maximum is preferably set so as to be located within a region defined by the virtual line.

In the motorcycle tire for uneven terrain according to the present invention, the position of the end of the turned-up portion varies in the circumferential direction. In the tire, the position of a boundary between different stiffnesses varies in the circumferential direction. In other words, the stiffness of the tire does not extremely change in the axial direction. In the tire, bending of the band is suppressed. In the tire, excessive deformation at the time of a high load is avoided. The tire is excellent in durability and handling stability.

### BRIEF DESCRIPTION OF THE DRAWINGS

FIG. 1 is a cross-sectional view of a portion of a motorcycle tire for uneven terrain according to an embodiment of the present invention;
FIG. 2 is a development of a portion of the tire in FIG. 1;
FIG. 3 is a development of a portion of a motorcycle tire for uneven terrain according to another embodiment of the present invention;
FIG. 4 is a development of a tread surface of a motorcycle tire for uneven terrain according to still another embodiment of the present invention;
FIG. 5 is an explanatory diagram showing a portion of the tire in FIG. 4 in an enlarged manner;
In FIG. 6, (a) to (e) are explanatory diagrams showing portions of tires of examples and comparative examples;
In FIG. 7, (a) and (b) are developments showing portions of tires of examples;
FIG. 8 is a cross-sectional view of a portion of a conventional tire; and
FIG. 9 is a development of a portion of a conventional tire.

### DESCRIPTION OF THE PREFERRED EMBODIMENTS

The following will describe in detail the present invention based on preferred embodiments with appropriate reference to the drawings. The present invention should not be construed in a limited manner based on the embodiments.

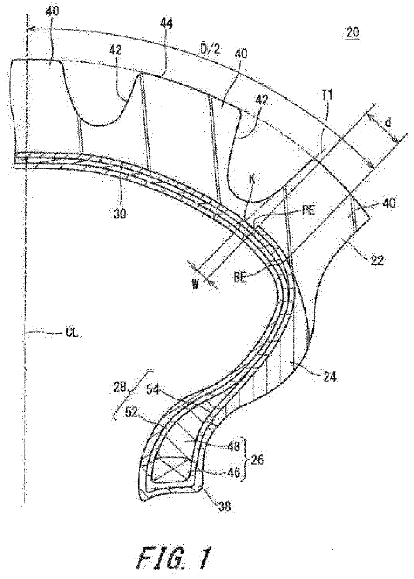

FIG. 1 is a cross-sectional view of a portion of a motorcycle tire 20 for uneven terrain according to an embodiment of the present invention. In FIG. 1, the up-down direction is the radial direction of the tire 20, the right-left direction is the axial direction of the tire 20, and the direction perpendicular to the surface of the sheet is the circumferential direction of the tire 20. An alternate long and short dash line CL represents the equator plane of the tire 20. The shape of the tire 20 is symmetrical about the equator plane CL.

The tire 20 includes a tread 22, sidewalls 24, beads 26, acarcass 28, a band 30, and chafers 38. The tire 20 is a pneumatic tire. The tire 20 is of a tube type. The tire 20 is mounted on a motorcycle which runs on uneven terrain. The tire 20 may be formed as a tubeless type.

The tread 22 is formed from a crosslinked rubber that is excellent in wear resistance . The tread 22 has a shape projecting outward in the radial direction. The tread 22 includes a large number of blocks 40 which stand substantially outward in the radial direction. The outer surface of each block 40 is a tread surface 44. A groove 42 is present between one block 40 and another block 40. In the tire 20, the adjacent blocks 40 are separated by the groove 42.

On a flat and smooth road surface, the outer surfaces of the blocks 40 mainly contact with the road surface. On a soft ground, a portion of the tire 20 is buried into the ground, and the blocks 40 remove mud. The blocks 40 can contribute to traction of the tire 20. In this respect, the height of each block 40 is preferably equal to or greater than 6 mm and preferably equal to or less than 19 mm. In the present specification, the height of each block 40 is the distance from the groove bottom to the tread surface 44. An outer end of each block located at the outer side in the axial direction is an end, in the axial direction, of the tread 22. In the present specification, the ratio of the total area of the tread surface 44 relative to the surface area of the tread 22 which is estimated on the assumption that there is no groove 42 in the tread 22 is referred to as a land ratio. In light of durability and grip performance, a preferable land ratio is equal to or greater than 10% but equal to or less than 30%.

The sidewalls 24 extend from ends, in the axial direction, of the tread 22 substantially inward in the radial direction. The sidewalls 24 are formed from a crosslinked rubber. The sidewalls 24 absorb impact from a road surface due to their flexure. Furthermore, the sidewalls 24 prevent damage of the carcass 28.

The beads 26 are located substantially inward of the sidewalls 24 in the radial direction. Each bead 26 includes a core 46 and an apex 48 extending from the core 46 outward in the radial direction. The core 46 has a ring shape. The core 46 includes a plurality of non-stretchable wires. The material of the wires is typically steel. The apex 48 is tapered outward in the radial direction. The apex 48 is formed from a highly hard crosslinked rubber.

The carcass 28 extends on and between the beads 26 at both sides, and extends along and inward of the tread 22 and the sidewalls 24. The carcass 28 includes a carcass ply 50. The carcass ply 50 is turned up around each core 46 from the inner side to the outer side in the axial direction. Due to this turning-up, a main portion 52 and a pair of turned-up portions 54 are formed in the carcass ply 50. The main portion 52 extends from the equator plane toward each bead 26. The turned-up portions 54 extend from the main portion 52 substantially outward in the radial direction. The turned-up portions 54 are laminated on the main portion 52. In FIG. 1, an end of the turned-up portion 54 is indicated by a reference sign PE. The carcass ply 50 can contribute to improvement of the stiffness of the tire 20.

The carcass ply 50 includes a large number of cords aligned with each other, and a topping rubber, which is not shown. Preferably, the absolute value of the angle of each cord relative to the equator plane is equal to or greater than 45°. The tire 20 in which the absolute value of the angle is equal to or greater than 45° is excellent in handling stability. In this respect, the absolute value of the angle is more preferably equal to or greater than 65° and more preferably equal to or less than 90°. The carcass 28 in which the absolute value of the angle is equal to or greater than 65° but equal to or less than 90° has a radial structure. In general, each cord is formed from an organic fiber . Examples of preferable organic fibers include polyester fibers, nylon fibers, rayon fibers, polyethylene naphthalate fibers, and aramid fibers. The carcass 28 may include a plurality of carcass plies. A carcass having a bias structure may be used.

The chafers 38 are located near the beads 26. When the tire 20 is mounted on a rim, the chafers 38 abut against the rim. The abutment allows protection of the vicinity of each bead 26. In general, the chafers 38 are composed of a fabric and a rubber with which the fabric is impregnated. Chafers formed simply from a rubber may be used.

The band 30 is located inward of the tread 22 in the radial direction. The band 30 includes a band cord wound helically along substantially the circumferential direction, which is not shown. The band 30 has a jointless structure. The angle of the band cord relative to the equator plane is preferably equal to or less than 5° and more preferably equal to or less than 2°. The carcass 28 is held by the band cord. The band 30 contributes to improvement of the stiffness, in the radial direction, of the tread 22. The band 30 contributes to the traction performance of the tire 20. The tire 20 including the band 30 exerts excellent handling stability during high speed running.

Steel and polyamide fibers (aramid fibers) can be suitably used for the band cord. Organic fibers such as nylon fibers, polyester fibers, rayon fibers, polyethylene naphthalate fibers, and the like may be used. From the standpoint that the holding force is great and high stiffness is obtained, polyamide fibers are more preferred.

In FIG. 1, an end of the band 30 is indicated by a reference sign BE. In the tire 20, the end BE of the band 30 is located outward of an end PE of the turned-up portion 54 in the axial direction. In the tire 20, each end portion of the band 30 is laminated on an end portion of each turned-up portion 54. In other words, each end portion of the band 30 and the end portion of each turned-up portion 54 overlap each other . The end portion of the band 30 of the tire 20 overlaps the end portion of the turned-up portion 54 along the entire circumference of the tire 20, which is not shown. The overlap of the end portion of the band 30 and the end portion of the turned-up portion 54 along the tire entire circumference can contribute to improvement of the stiffness of the tire 20. The tire 20 does not include a belt. The overlap of the end portion of the band 30 and the end portion of the turned-up portion 54 particularly exerts a significant effect of improving the stiffness of each sidewall 24 of the tire 20 which includes no belt and has a radial structure.

The tire 20 may include a belt. The belt is arranged outward of the carcass 28 in the radial direction so as to be laminated on the carcass 28. The belt reinforces the carcass 28. The belt contributes to improvement of the stiffness of the tread 22. In the tire 20 including the belt, when each end portion of the band 30 and the end portion of each turned-up portion 54 overlap each other, high stiffness is obtained at the tread 22 and the sidewalls 24. The tire 20 can withstand great impact during running on uneven terrain. The belt includes a large number of cords aligned with each other, and a topping rubber. In general, the absolute value of the angle of each belt cord relative to the equator plane is equal to or greater than 10° but equal to or less than 35°. The material of the belt cords is preferably steel. An organic fiber may be used for the belt cords. The tire 20 may include a plurality of belts.

As is obvious from FIG. 1, in the tire 20, the end portions of the band 30 are located inward of the end portions of the turned-up portions 54 in the radial direction. In the tire 20, each end portion of the band 30 is interposed between the end portion of each turned-up portion 54 and the main portion 52 of the carcass ply 50 along the entire circumference of the tire 20. In the tire 20, each end portion of the band 30 is firmly held. The holding of the end portion of the band 30 contributes to improvement of the stiffness of the tire 20. The tire 20 is excellent in handling stability during high speed running.

The end portions of the band 30 may be located outward of the end portions of the turned-up portions 54 in the radial direction. In the tire 20 in which the end portions of the band 30 are located outward of the end portions of the turned-up portions 54 in the radial direction, excessive stiffness is avoided. The tire 20 having appropriate stiffness is excellent in impact stability and ride comfort. In the tire 20 according to the present invention, it is possible to select the position of the end portion of each turned-up portion 54 in accordance with desired handling stability performance.

In FIG. 1, a double-headed arrow D/2 indicates 1/2 of the width D, in the axial direction, of the band 30. A double-headed arrow d indicates the distance in the axial direction from the end BE of the band 30 to the end PE of the turned-up portion 54. The distance d is equal to the length of a portion where the end portion of the turned-up portion 54 and the band 30 overlap each other. From the standpoint that the band 30 is firmly held, the distance d is preferably equal to or greater than 5 mm and more preferably equal to or greater than 10 mm. In light of avoiding excessive stiffness, the distance d is preferably equal to or less than 30 mm and more preferably equal to or less than 20 mm. The width D, in the axial direction, of the band 30 is measured along the outer peripheral surface of the band 30. The distance d is measured along the outer peripheral surface of the turned-up portion 54.

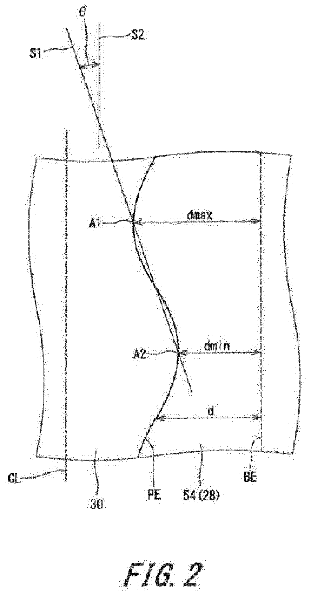

FIG. 2 is a development of a portion of the tire 20 in FIG. 1. In FIG. 2, the up-down direction is the circumferential direction, the right-left direction is the axial direction, and the direction perpendicular to the surface of the sheet is the radial direction of the tire 20. An alternate long and short dash line CL represents the equator plane of the tire 20, a broken line BE indicates the position of the end BE of the band 30, and a curved line PE indicates the position of the end PE of the turned-up portion 54. The end portion of the band 30 is overlapped by the end portion of the turned-up portion 54 of the carcass ply 50.

As shown, in the tire 20, the end PE of the turned-up portion 54 has substantially an S-shape. In the tire 20, the position of the end PE of the turned-up portion 54 varies in the circumferential direction. In the tire 20 in which the position of the end of the turned-up portion 54 varies, the stiffness of the tire 20 does not extremely change at the boundary between the region overlapped by the turned-up portion 54 and the region not overlapped by the turned-up portion 54. When the tire 20 receives a high load during running on uneven terrain, great bending of the band 30 is suppressed. In the tire 20, damage of the tread 22 caused by excessive deformation is avoided. The handling stability of the tire 20 is not impaired. In this respect, the variation of the position of the end PE of the turned-up portion 54 is preferably repeated along the tire entire circumference at a constant cycle in the circumferential direction.

In FIG. 2, a double-headed arrow dmax indicates a maximum value of the distance d, and a double-headed arrow dmin indicates a minimum value of the distance d. In the present specification, an amount of overlap L of the end portion of the band 30 and the end portion of the turned-up portion 54 means the average of the maximum value dmax and the minimum value dmin. The ratio (L/D) of the amount of overlap L relative to the width D, in the axial direction, of the band 30 is preferably equal to or greater than 1/12 and preferably equal to or less than 1/6. In the tire 20 in which the ratio (L/D) is equal to or greater than 1/12, the band 30 can be more firmly held. The tire20 isexcellent in handling stability during running on uneven terrain. In this respect, the ratio (L/D) is more preferably equal to or greater than 1/10. In the tire 20 in which the ratio (L/D) is equal to or less than 1/6, excessive stiffness of the tread 22 can be suppressed. In the tire 20, the impact absorbability is not impaired. In this respect, the ratio (L/D) is more preferably equal to or less than 1/8.

In FIG. 2, a straight line S2 is a straight line extending in the circumferential direction. A point A1 indicates a position on the end PE of the turned-up portion 54 at which the distance d is at its maximum. A point A2 is a position on the end PE of the turned-up portion 54 at which the distance d is at its minimum. A straight line obtained by connecting the point A1 to the point A2 is indicated as a straight line S1. In the tire 20, the straight line S1 and the straight line S2 intersects each other. In FIG. 2, the angle between the straight line S1 and the straight line S2 is indicated as an angle θ. The angle θ is measured on a virtual plane including the straight line S1 and the straight line S2. In general, the angle θ is less than 90°. In light of ensuring desired stiffness of the tire 20 and ease of producing the tire 20, the angle θ is preferably equal to or less than 60° and more preferably equal to or less than 45°. The angle θ is preferably equal to or greater than 15°. In the tire 20 in which the angle θ is equal to or greater than 15°, concentration of stress applied from the overlapped end PE of the turned-up portion 54 to the band 30 is dispersed, and thus damage of the band 30 is suppressed. The tire 20 is excellent in durability. In this respect, the angle θ is more preferably equal to or greater than 30°.

In FIG. 1, a straight line obtained by extending an inner side surface, in the axial direction, of the block located at the outermost portion in the axial direction is indicated as an alternate long and two short dashes line T1. The intersection of the alternate long and two short dashes line T1 and the band 30 is indicated as a point K. The tread 22 is thin near the point K. In the tire 20, the distance W between the end PE of the turned-up portion 54 and the point K is preferably equal to or greater than 2.0 mm. In the tire 20 in which the distance W is equal to or greater than 2.0 mm, the boundary between the region where the band 30 and the turned-up portion 54 overlap each other and the region where the band 30 and the turned-up portion 54 do not overlap each other is sufficiently separated from the thin portion of the tread 22. In the tire 20, damage of the tread 22 caused by a great load during running on uneven terrain is suppressed. The tire 20 is excellent in durability. In this respect, the distance W is more preferably equal to or greater than 4.0 mm. In light of improvement of stiffness, the distance W is preferably equal to or less than 8.0 mm.

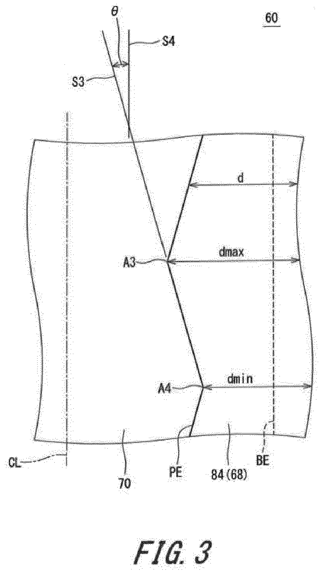

FIG. 3 is a development of a portion of a tire 60 according to another embodiment of the present invention. The tire 60 includes a tread, sidewalls, beads, a carcass 68, a band 70, and chafers, which is not shown. As the sidewalls, the beads, and the chafers, those described above for the tire 20 can be similarly used. The carcass 68 includes a carcass ply. The carcass ply is turned up around each core from the inner side to the outer side in the axial direction. Due to this turning-up, a main portion and a pair of turned-up portions 84 are formed in the carcass ply. The turned-up portions 84 are laminated on the main portion. The band 70 includes a band cord wound helically along substantially the circumferential direction. The band 70 has a jointless structure.

In FIG. 3, the up-down direction is the circumferential direction, the right-left direction is the axial direction, and the direction perpendicular to the surface of the sheet is the radial direction of the tire 60. An alternate long and short dash line CL represents the equator plane of the tire 60, a broken line BE indicates the position of an end BE of the band 70, and a curved line PE indicates the position of an end PE of the turned-up portion 84. An end portion of the band 70 is overlapped by an end portion of the turned-up portion 84 of the carcass ply. A double-headed arrow d indicates the distance from the end BE of the band 70 to the end PE of the turned-up portion 84. As shown, in the tire 60, the end PE of the turned-up portion 84 shows a continuous mountain-like shape. In the tire 60, the distance d varies in the circumferential direction. The direction of a straight line S4 is the circumferential direction. A point A3 is a position on the end PE of the turned-up portion 84 at which the distance d is at its maximum. A point A4 is a position on the end PE of the turned-up portion 84 at which the distance d is at its minimum. A straight line obtained by connecting the point A3 to the point A4 is indicated as a straight line S3. An angle θ is the angle between the straight line S3 and the straight line S4. In the tire 60, control of the angle θ is easy.

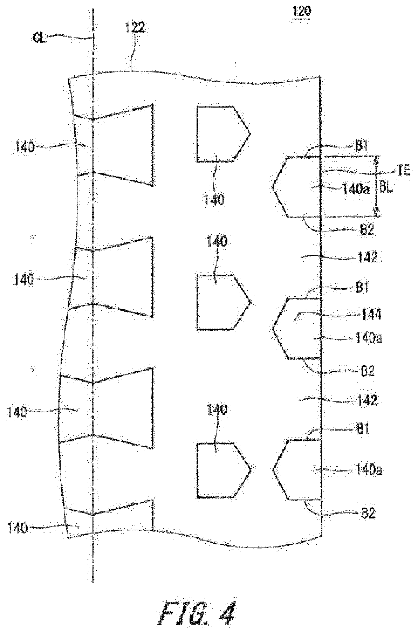

FIG. 4 is a development of a tread surface 144 of a tire 120 according to still another embodiment of the present invention. In FIG. 4, the up-down direction is the circumferential direction of the tire 120, and the right-left direction is the axial direction of the tire 120. The direction perpendicular to the surface of the sheet is the radial direction of the tire 120. An alternate long and short dash line CL represents the equator plane of the tire 120. An end, in the axial direction, of the tread surface 144 is indicated as a reference sign TE.

The tire 120 includes a tread 122, sidewalls, beads, a carcass, a band 130, and chafers, which is not shown. As the sidewalls, the beads, and the chafers, those described above for the tire 20 can be similarly used.

As shown in FIG. 4, a large number of blocks 140 are formed in the tread 122. The adjacent blocks 140 are separated by a groove 142. Each block 140 has an outer surface and a plurality of side surfaces extending from the outer surface substantially inward in the radial direction. The outer surface of each block 140 is the tread surface 144. An outer end, in the axial direction, of the outer surface of each block 140a located at the outermost portion in the axial direction is the end TE of the tread surface 144.

On the tread surface 144, a region at and near the equator plane is a center region. A region from the outer side, in the axial direction, of the center region to the end TE of the tread surface 144 is a shoulder region. In the shoulder region, a plurality of the blocks 140a are arranged so as to be spaced apart from each other in the circumferential direction. These blocks 140a are also referred to as shoulder blocks.

The thickness of the portion of the tread 122 at which each block 140 is formed is larger than the thickness of the portion thereof at which the groove 142 is formed. In the tread 122, the stiffness of the region where each block 140 is present is higher than the stiffness of the region where the groove 142 is present. On the tread surface 144, regions having different stiffnesses are formed by the large number of blocks 140. In the shoulder region of the tread surface 144, a stiffness distribution based on the arrangement of the plurality of blocks 140a is present.

B1 and B2 shown in FIG. 4 indicate side surfaces, in the circumferential direction, of each block 140a. In the present embodiment, each of the side surfaces B1 and B2 is located substantially parallel to the axial direction. A double-headed arrow BL indicates the length, in the circumferential direction, of the block 140a. The length BL in the circumferential direction is measured on a development in which the tread surface 144 is developed in a plane. The shape of each block 140a is not particularly limited as long as the object of the present invention is achieved. When another shape is selected for each block 140a, the length BL in the circumferential direction is measured between two side surfaces between which the distance in the circumferential direction is at its maximum, among a plurality of side surfaces facing in substantially the circumferential direction.

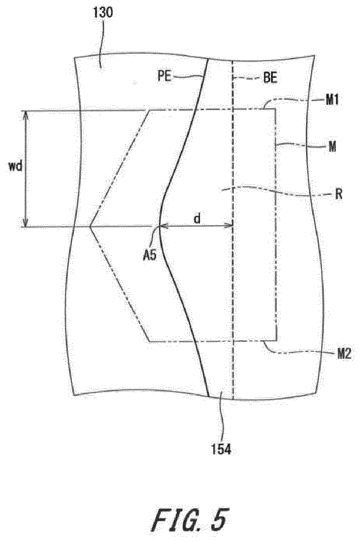

FIG. 5 is a development showing in an enlarged manner a portion of the carcass and the band 130 included in the tire 120 in FIG. 4. In FIG. 5, the up-down direction is the circumferential direction, and the right-left direction is the axial direction. The direction perpendicular to the surface of the sheet is the radial direction of the tire 120. The carcass includes a carcass ply, which is not shown. The carcass ply is turned up around each core from the inner side to the outer side in the axial direction. Due to this turning-up, a main portion and a pair of turned-up portions 154 are formed in the carcass ply. The turned-up portions 154 are laminated on the main portion. The band 130 includes a band cord wound helically along substantially the circumferential direction. The band 130 has a jointless structure.

In FIG. 5, a curved line PE indicates the position of an end PE of the turned-up portion 154, and a broken line BE indicates the position of an end of the band 130. The band 130 and the turned-up portion 154 are laminated on the tread 122 and inward of the tread 122 in the radial direction. An end portion of the band 130 is overlapped by an end portion of the turned-up portion 154.

The stiffness of the region where the end portion of the turned-up portion 154 and the end portion of the band 130 overlap each other is higher than the stiffness of the region where the end portion of the turned-up portion 154 and the end portion of the band 130 do not overlap each other. As shown in FIG. 5, the position of the end PE of the turned-up portion 154 varies in the circumferential direction. In the tire 120, regions having different stiffnesses are formed in the carcass due to the variation of the position of the end PE of the turned-up portion 154. The carcass has a stiffness distribution based on the variation of the position of the end PE of the turned-up portion 154.

In FIG. 5, a position on the end PE of the turned-up portion 154 at which the distance d between the end PE and the end BE of the band 130 is at its maximum is indicated as a point A5. In the tire 120 according to the embodiment, the point A5 is located inward of the end BE of the band 130 in the axial direction. A virtual line indicating a position at which each side surface of the block 140a at the outermost portion in the axial direction intersects the band 130 or the turned-up portion 154 when being extended substantially inward in the radial direction is indicated as an alternate long and two short dashes line M. The position of the virtual line M is obtained in the same manner as the above-described point K in the cross-sectional view of the FIG. 1. A reference sign M1 indicates a virtual line corresponding to the side surface B1, in the circumferential direction, of the block 140a. A reference sign M2 indicates a virtual line corresponding to the side surface B2, in the circumferential direction, of the block 140a.

As shown, in the tire 120 according to the present embodiment, the point A5 is set so as to be located within a region R defined by the virtual line M. In the tire 120, the band 130 and the turned-up portion 154 overlap each other at the inner side, in the radial direction, of each block 140a. In the tire 120, in the shoulder region, the portion of the carcass that has high stiffness is formed so as to be located at the inner side of the portion of the tread surface 144 that has high stiffness.

When a motorcycle on which the tire 120 is mounted runs, the blocks 140 contact with the ground. A great force is applied to the band 130 and the carcass that are located inward of the blocks 140 in the radial direction. During turning running, particularly, in the shoulder region, a great force is applied to the band 130 and the carcass that are located inward of the blocks 140a in the radial direction. As described above, in the tire 120 in which the point A5 is set so as to be located within the region R, the stiffness of the carcass is set so as to be high at the inner side of each block 140a to which a great load is applied. The tire 120 is excellent in grip performance and traction performance during turning running. In this respect, more preferably, the point A5 is set so as to be located within a region obtained by projecting the outer surface of the block 140a onto the band 130 or the turned-up portion 154.

In the tire 120 according to the present embodiment, the position relationship in the circumferential direction between the block 140a located at the outermost portion in the axial direction and the position on the end PE of the turned-up portion 154 at which the distance d between the end PE and the end BE of the band 130 is at its maximum contributes to improvement of running performance during turning. In FIG. 5, the distance in the circumferential direction from the position on the end PE of the turned-up portion 154 at which the distance d is at its maximum to the virtual line M1 corresponding to the side surface B1, in the circumferential direction, of the block 140a at the outermost portion in the axial direction is indicated as a double-headed arrow Wd. The distance Wd in the circumferential direction may be measured as the distance to the virtual line M2 corresponding to the other side surface B2, in the circumferential direction, of the block 140a.

In light of running stability during turning, the ratio (Wd/BL) of the distance Wd in the circumferential direction relative to the length BL, in the circumferential direction, of the block 140a is preferably equal to or greater than 0.30 and preferably equal to or less than 0.70. More preferably, the ratio (Wd/BL) is equal to or greater than 0.40 but equal to or less than 0.60. Further preferably, the ratio (Wd/BL) is equal to or greater than 0.45 but equal to or less than 0.55. In the tire 120, the stiffness distribution of the tread surface and the stiffness distribution of the carcass are not greatly different from each other. Ideally, the ratio (Wd/BL) is 0.50.

### EXAMPLES

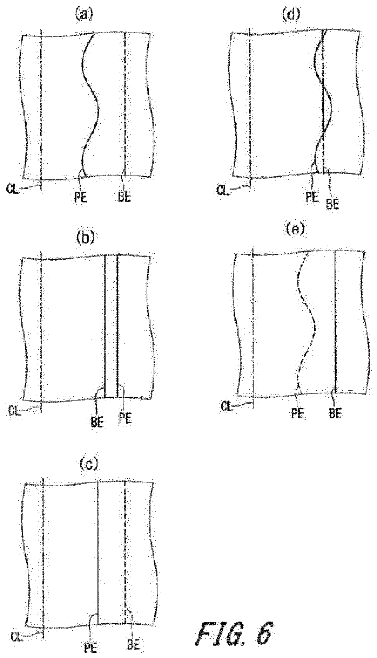

The following will show effects of the present invention by means of examples, but the present invention should not be construed in a limited manner based on the description of these examples. It should be noted that (a) to (e) of FIG. 6 show a state of overlap of an end portion of a band and an end portion of a turned-up portion in tires of examples and comparative examples described later. In FIG. 6, the up-down direction is the circumferential direction of each tire, the right-left direction is the axial direction of each tire, and the direction perpendicular to the surface of the sheet is the radial direction of each tire. An alternate long and short dash line CL represents the equator plane of each tire, a broken line BE indicates the position of an end BE of the band, and a solid line PE indicates the position of an end PE of the turned-up portion.

### [Experiment 1]

### [Example 1]

A motorcycle tire pair for uneven terrain of Example 1 having the fundamental structure shown in FIG. 1 and having specifications shown in Table 1 below was obtained. In the tire pair, the size of a front tire is 80/100-21, and the size of a rear tire is 120/80-19. In each tire, the carcass includes a carcass ply including cords having an angle of 65° relative to the circumferential direction. The cords are formed from a polyester fiber. The carcass ply is turned up around the core of each bead from the inner side to the outer side in the axial direction. The band includes a band cord wound helically along substantially the circumferential direction. The material of the band cord is a polyamide fiber. The absolute value of the angle of the band cord relative to the equator plane is 0.5°. The band has a jointless structure. The structure of the band is shown as "JLB" in Table 1.

Each end portion of the band overlaps an end portion of the turned-up portion of the carcass ply along the entire circumference of the tire. The position of the end of the turned-up portion varies in the circumferential direction. A portion of the state of overlap of the end portion of the turned-up portion and the end portion of the band is shown in (a) of FIG. 6. In (a) of FIG. 6, the end PE of the turned-up portion is located outward of the end BE of the band in the radial direction. The end portion of the band is interposed between the end portion of the turned-up portion and the main portion. The end PE of the turned-up portion has substantially an S-shape.

The maximum value dmax of the distance d between the end PE of the turned-up portion and the end BE of the band in the tire is 16 mm, and the minimum value dmin of the distance d is 8 mm. The ratio (L/D) of the amount of overlap L of the end portion of the band and the end portion of the turned-up portion relative to the width D, in the axial direction, of the band is 1/10. The angle θ of a straight line obtained by connecting the end (point A1) of the turned-up portion at which the distance d is at its maximum and the end (point A2) of the turned-up portion at which the distance d is at its minimum, relative to the circumferential direction, is 45°. The distance W between the end of the turned-up portion and the intersection K of the band and a straight line obtained by extending the inner side surface, in the axial direction, of the block located at the outermost portion in the axial direction is 6.0 mm.

### [Examples 2 to 5]

Tire pairs having specifications of Examples 2 to 5 were obtained in the same manner as Example 1, except the angle θ was as shown in Table 1 below. A portion of the state of overlap of the end portion of the turned-up portion and the end portion of the band in Examples 2 to 5 is shown in (a) of FIG. 6.

### [Comparative Examples 1 and 3]

Comparative Examples 1 and 3 shown in Table 2 have the specifications of a conventional tire pair. A portion of the state of overlap of the end portion of the turned-up portion and the end portion of the band in Comparative Examples 1 and 3 is shown in (b) of FIG. 6. In (b) of FIG. 6, the end portion of the turned-up portion does not overlap the end portion of the band. The shape of the end PE of the turned-up portion is substantially straight. In the tire, the position of the end PE of the turned-up portion does not vary in the circumferential direction. It should be noted that the structure of the band of Comparative Example 1 is not a jointless structure.

### [Comparative Example 2]

Comparative Example 2 shown in Table 2 has the specification of a conventional tire pair. The band of the tire pair does not have a jointless structure. A portion of the state of overlap of the end portion of the turned-up portion and the end portion of the band in Comparative Example 2 is shown in (c) of FIG. 6. In (c) of FIG. 6, the end portion of the band is located inward of the end portion of the turned-up portion in the radial direction. The end portion of the band overlaps the end portion of the turned-up portion of the carcass ply along the entire circumference of the tire. The shape of the end PE of the turned-up portion is substantially straight. In the tire, the position of the end PE of the turned-up portion does not vary in the circumferential direction.

### [Comparative Example 4]

In a tire pair of the Comparative Example 4, a portion of the end portion of the turned-up portion does not overlap the end portion of the band. A portion of the state of overlap is shown in (d) of FIG. 6. In (d) of FIG. 6, the end portion of the band is located inward of the end portion of the turned-up portion in the radial direction. A portion of the end portion of the band is not laminated on the end portion of the turned-up portion of the carcass ply. The end PE of the turned-up portion has substantially an S-shape. In the tire, the position of the end PE of the turned-up portion varies in the circumferential direction. The configuration of the tire except for the state of overlap is the same as that in Example 1.

### [Examples 6 to 9]

Tire pairs having specifications of Examples 6 to 9 were obtained in the same manner as Example 1, except the ratio (L/D) was as shown in Table 3 below. A portion of the state of overlap of the end portion of the turned-up portion and the end portion of the band in Examples 6 to 9 is shown in (a) of FIG. 6.

### [Comparative Examples 5 to 7]

Tire pairs having specifications of Comparative Examples 5 to 7 were obtained in the same manner as Comparative Example 2, except the ratio (L/D) was as shown in Table 4 below. A portion of the state of overlap of the end portion of the turned-up portion and the end portion of the band in Comparative Examples 5 to 7 is shown in (c) of FIG. 6.

### [Example 10]

A tire pair having specifications of Example 10 was obtained in the same manner as Example 1, except the position of the end PE of the turned-up portion was inward of the band in the radial direction. A portion of the state of overlap of the end portion of the turned-up portion and the end portion of the band in Example 10 is shown in (e) of FIG. 6. In (e) of FIG. 6, the end PE of the turned-up portion is located inward of the end BE of the band in the radial direction. The end portion of the band is not interposed between the end portion of the turned-up portion and the main portion. The end PE of the turned-up portion has substantially an S-shape. In the tire, the position of the end PE of the turned-up portion varies in the circumferential direction.

### [Examples 11 and 12]

Tire pairs having specifications of Examples 11 and 12 were obtained in the same manner as Example 1, except the angle of each cord of the carcass ply relative to the circumferential direction was as shown in Table 5 below. A portion of the state of overlap of the end portion of the turned-up portion and the end portion of the band in Examples 11 and 12 is shown in (a) of FIG. 6.

### [Handling Stability]

Each tire pair indicated in Tables 1 to 5 was mounted on a motocross motorcycle having an engine displacement of 450 cm³. The motocross motorcycle was run on a motocross course at a maximum speed of about 60 km/h and at an average speed of about 30 km/h. The running time per one lap of the course is about 1 minute and 30 seconds. Then, the rider evaluated traction performance, tire stiffness feeling, and impact absorbability after 5 times of running. A score of each evaluation item for the tire pair of Comparative Example 1 was set as 5.00, and the results of the tire pairs of Examples 1 to 12 and Comparative Examples 2 to 7 scored on a 1 to 10 basis are shown in Tables 1 to 5. The average of the scores of the respective evaluation items is evaluated as handling stability. A higher value indicates more excellent handling stability. When the value changes by 0.25, this change is perceived as a significant change in handling stability by the rider who is an evaluator.

### [Durability]

Each tire pair indicated in Tables 1 to 5 was mounted on a motocross motorcycle having an engine displacement of 450 cm³. The motocross motorcycle was run on a motocross course for 45 minutes. After the running, the tire pair was inspected for presence/absence of damage. The evaluation was categorized as follows based on the degree of visually-observed damage. The results of the inspection for Examples 1 to 12 and Comparative Examples 1 to 7 are shown in Tables 1 to 5.
- A:: No damage
- B:: Damage was visually observed at 1 to 5 locations.
- C:: Damage was visually observed at 6 locations or more.

**Table 1 Results of Evaluation**

| | Ex.1 | Ex.2 | Ex.3 | Ex.4 | Ex.5 |
|---|---|---|---|---|---|
| Carcass cord [°] | 65 | 65 | 65 | 65 | 65 |
| Structure of band | JLB | JLB | JLB | JLB | JLB |
| Overlap state¹⁾ | 6 (a) | 6 (a) | 6 (a) | 6 (a) | 6 (a) |
| Turned-up portion end²⁾ | (I) | (I) | (I) | (I) | (I) |
| Ratio (L/D) | 1/10 | 1/10 | 1/10 | 1/10 | 1/10 |
| Angle θ [°] | 45 | 20 | 10 | 60 | 65 |
| Traction | 6.00 | 6.00 | 6.00 | 6.00 | 6.00 |
| Stiffness | 5.25 | 5.25 | 5.25 | 5.10 | 5.00 |
| Impact absorbability | 5.10 | 5.10 | 5.10 | 5.10 | 5.10 |
| Handling stability | 5.50 | 5.50 | 5.50 | 5.50 | 5.50 |
| Durability | A | A | B | A | A |

| | | | | | |
|---|---|---|---|---|---|
| 1) See FIG. 6 2) (I): Outer side of the band end in the radial direction, (II): Inner side of the band end in the radial direction. | | | | | |

**Table 2 Results of Evaluation**

| | Com. Ex.1 | Com. Ex.2 | Com. Ex.3 | Com. Ex.4 |
|---|---|---|---|---|
| Carcass cord [°] | 65 | 65 | 65 | 65 |
| Structure of band | breaker | breaker | JLB | JLB |
| Overlap state¹⁾ | 6(b) | 6(c) | 6(b) | 6 (d) |
| Turned-up portion end²⁾ | - | (I) | - | (I) |
| Ratio (L/D) | - | 1/10 | - | 1/10 |
| Angle θ [°] | - | - | - | 45 |
| Traction | 5.00 | 5.00 | 6.00 | 5.50 |
| Stiffness | 5.00 | 5.50 | 4.50 | 5.25 |
| Impact absorbability | 5.00 | 4.75 | 5.50 | 4.50 |
| Handling stability | 5.00 | 5.10 | 5.30 | 5.10 |
| Durability | A | A | C | C |

| | | | | |
|---|---|---|---|---|
| 1) See FIG. 6 2) (I): Outer side of the band end in the radial direction, (II): Inner side of the band end in the radial direction. | | | | |

**Table 3 Results of Evaluation**

| | Ex.6 | Ex.7 | Ex.8 | Ex.9 |
|---|---|---|---|---|
| Carcass cord [°] | 65 | 65 | 65 | 65 |
| Structure of band | JLB | JLB | JLB | JLB |
| Overlap state¹⁾ | 6 (a) | 6 (a) | 6 (a) | 6 (a) |
| Turned-up portion end²⁾ | (I) | (I) | (I) | (II) |
| Ratio (L/D) | 1/20 | 1/12 | 1/6 | 1/4 |
| Angle θ [°] | 45 | 45 | 45 | 45 |
| Traction | 6.00 | 6.00 | 6.00 | 6.00 |
| Stiffness | 5.10 | 5.25 | 5.50 | 6.00 |
| Impact absorbability | 5.50 | 5.25 | 5.50 | 4.75 |
| Handling stability | 5.25 | 5.50 | 5.50 | 5.25 |
| Durability | A | A | A | A |

| | | | | |
|---|---|---|---|---|
| 1) See FIG. 6 2) (I): Outer side of the band end in the radial direction, (II): Inner side of the band end in the radial direction. | | | | |

**Table 4 Results of Evaluation**

| | Com. Ex.5 | Com. Ex.6 | Com. Ex.7 |
|---|---|---|---|
| Carcass cord [°] | 65 | 65 | 65 |
| Structure of band | JLB | JLB | JLB |
| Overlap state¹⁾ | 6(c) | 6 (c) | 6 (c) |
| Turned-up portion end²⁾ | (I) | (I) | (I) |
| Ratio (L/D) | 1/20 | 1/10 | 1/4 |
| Angle θ [°] | - | - | - |
| Traction | 6.00 | 6.00 | 6.00 |
| Stiffness | 5.00 | 5.25 | 5.25 |
| Impact absorbability | 5.25 | 5.10 | 4.50 |
| Handling stability | 5.4 | 5.5 | 5.1 |
| Durability | C | C | C |

| | | | |
|---|---|---|---|
| 1) See FIG. 6 2) (I): Outer side of the band end in the radial direction, (II): Inner side of the band end in the radial direction. | | | |

**Table 5 Results of Evaluation**

| | Ex.10 | Ex.11 | Ex.12 |
|---|---|---|---|
| Carcass cord [°] | 65 | 45 | 30 |
| Structure of band | JLB | JLB | JLB |
| Overlap state¹⁾ | 6 (e) | 6 (a) | 6 (a) |
| Turned-up portion end²⁾ | (II) | (I) | (I) |
| Ratio (L/D) | 1/10 | 1/10 | 1/10 |
| Angle θ [°] | 45 | 45 | 45 |
| Traction | 6.00 | 5.50 | 5.25 |
| Stiffness | 5.00 | 5.50 | 5.75 |
| Impact absorbability | 5.25 | 4.75 | 4.50 |
| Handling stability | 5.4 | 5.3 | 5.2 |
| Durability | A | A | A |

| | | | |
|---|---|---|---|
| 1) See FIG. 6 2) (I): Outer side of the band end in the radial direction, (II): Inner side of the band end in the radial direction. | | | |

### [Experiment 2]

### [Examples 13 to 16]

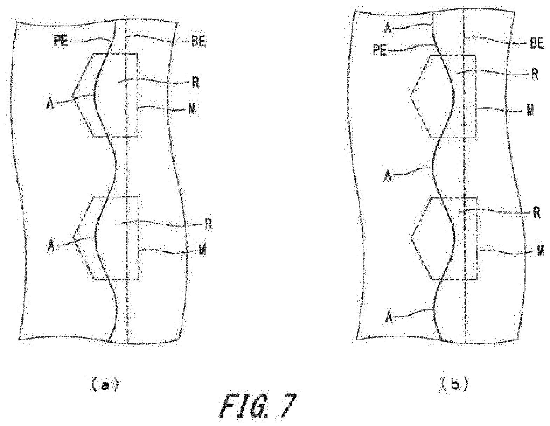

Tire pairs having specifications of Examples 13 to 16 were obtained in the same manner as Example 1, except the position relationship in the circumferential direction of the end of the turned-up portion with the block located at the outermost portion in the axial direction was as shown in Table 6 below and FIG. 7. It should be noted that FIG. 7 is a development for explaining the position relationship of the end of the turned-up portion with the block located at the outermost portion in the axial direction. In FIG. 7, the up-down direction is the circumferential direction, the right-left direction is the axial direction, and the direction perpendicular to the surface of the sheet is the radial direction of the tire. A broken line BE indicates the position of the end BE of the band, and a curved line PE indicates the position of the end PE of the turned-up portion. A position at which each side surface of each block located at the outermost portion in the axial direction intersects the band or the turned-up portion when being extended substantially inward in the radial direction is indicated as a virtual line M. A region defined by the virtual line M is indicated by a reference sign R. At the position of each point A, the distance d between the end PE of the turned-up portion and the end BE of the band is at its maximum.

The position relationship between the end of the turned-up portion and each block at the outermost portion in the axial direction in Examples 13 to 15 is shown in (a) of FIG. 7. In Examples 13 to 15, the end PE (point A) of the turned-up portion at which the distance between the end PE and the end BE of the band is at its maximum is located within the region R. The position relationship between the end of the turned-up portion and the block in Example 16 is shown in (b) of FIG. 7. In Example 16, each point A is not located within the region R.

### [Handling Stability and Durability]

The results of the respective tire pairs of Examples 13 to 16 evaluated for handling stability and durability by the method described above in Experiment 1 are shown in Table 6.

**Table 6 Results of Evaluation**

| | Ex.13 | Ex.14 | Ex.15 | Ex.16 |
|---|---|---|---|---|
| Carcass cord [°] | 65 | 65 | 65 | 65 |
| Structure of band | JLB | JLB | JLB | JLB |
| Overlap state¹⁾ | 6 (a) | 6 (a) | 6 (a) | 6 (a) |
| Turned-up portion end²⁾ | (I) | (I) | (I) | (I) |
| Ratio (L/D) | 1/10 | 1/10 | 1/10 | 1/10 |
| Angle θ [°] | 45 | 45 | 45 | 45 |
| Position relationship³⁾ | 7 (a) | 7 (a) | 7 (a) | 7 (b) |
| Ratio (Wd/BL) | 0.50 | 0.35 | 0.25 | - |
| Traction | 6.50 | 6.25 | 6.25 | 6.00 |
| Stiffness | 5.50 | 5.25 | 5.25 | 5.00 |
| Impact absorbability | 5.50 | 5.50 | 5.25 | 5.25 |
| Handling stability | 6.00 | 5.70 | 5.50 | 5.40 |
| Durability | A | A | A | A |

| | | | | |
|---|---|---|---|---|
| 1) See FIG. 6 2) (I): Outer side of the band end in the radial direction, (II): Inner side of the band end in the radial direction. 3) See FIG. 7 | | | | |

As shown in Tables 1 to 6, the tires of the Examples are more excellent in handling stability and durability than the tires of the Comparative Examples and the conventional examples . From the results of evaluation, advantages of the present invention are clear.

The tire according to the present invention can be mounted on a motorcycle which runs on various uneven terrains . The tire is particularly suitable for a motorcycle for motocross race. The above descriptions are merely illustrative examples, and various modifications can be made without departing from the principles of the present invention.

A tire includes a tread, a pair of beads, a carcass, and a band. The tread includes a large number of blocks which stand substantially outward in a radial direction. The carcass includes a carcass ply which is turned up around each bead. The carcass ply includes a main portion which extends from an equator plane toward each bead; and a pair of turned-up portions which extend from the main portion substantially outward in the radial direction. The band includes a band cord which is helically wound along a circumferential direction. An end portion of the turned-up portion and an end portion of the band overlap each other at an inner side, in the radial direction, of the tread. In the tire, a position of an end of the turned-up portion varies in the circumferential direction. The tire is excellent in handling stability and durability.

## Claims

1. A motorcycle tire for uneven terrain comprising:
a tread (22);
a pair of beads (26);
a carcass (28; 68) extending on and between one of the beads (26) and the other of the beads (26), and along the tread (22) and inward of the tread (22) in a radial direction; and
a band (30; 70; 130) laminated on the carcass (28; 68) and located inward of the tread (22) in the radial direction, wherein
the tread (22) includes a large number of blocks which stand substantially outward in the radial direction,
the carcass (28; 68) includes a carcass ply (50) which is turned up around each bead,
the carcass ply (50) includes a main portion (52) which extends from an equator plane toward each bead; and a pair of turned-up portions (54; 84; 154) which extend from the main portion (52) substantially outward in the radial direction,
the band (30; 70; 130) includes a band cord which is helically wound along a circumferential direction, and
an end portion of the band (30; 70; 130) and an end portion of the turned-up portion (54; 84; 154) overlap each other at an inner side, in the radial direction, of the tread (22),
**characterized in that**
a position (PE) of an end of the turned-up portion (54; 84; 154) varies in the circumferential direction.

2. The motorcycle tire for uneven terrain according to claim 1, wherein when a distance between the end of the turned-up portion (54; 84; 154) and an end of the band (30; 70; 130) is indicated by d and an average of a maximum value and a minimum value of the distance d is set as an amount of overlap L of the end portion of the band (30; 70; 130) and the end portion of the turned-up portion, a ratio (L/D) of the amount of overlap L relative to a width D, in an axial direction, of the band (30; 70; 130) is equal to or greater than 1/12 but equal to or less than 1/6.

3. The motorcycle tire for uneven terrain according to claim 1, wherein when a position on the end of the turned-up portion (54) at which a distance d between the end of the turned-up portion (54) and an end of the band (30) is at its maximum is a point A1 and a position on the end of the turned-up portion (54) which is adjacent to the point A1 and at which the distance d is at its minimum is a point A2, an angle θ of a straight line obtained by connecting the point A1 to the point A2, relative to the circumferential direction, is equal to or greater than 15° but equal to or less than 60°.

4. The motorcycle tire for uneven terrain according to claim 1, wherein the end portion of the turned-up portion (54; 84; 154) is located outward of the end portion of the band (30; 70; 130) in the radial direction.

5. The motorcycle tire for uneven terrain according to claim 1, wherein a distance W between the end of the turned-up portion (54; 84; 154) and an intersection K of the band (30; 70; 130) and a straight line obtained by extending an inner side surface, in an axial direction, of a block which stands at an outermost portion in the axial direction is equal to or greater than 2.0 mm.

6. The motorcycle tire for uneven terrain according to claim 2, wherein when a position at which each side surface of a block standing at an outermost portion in the axial direction intersects the band (30; 70; 130) or the turned-up portion (54; 84; 154) when being extended substantially inward in the radial direction is indicated as a virtual line, a position on the end of the turned-up portion (54; 84; 154) at which the distance d is at its maximum is set so as to be located within a region defined by the virtual line.

## Patentansprüche

1. Motorradreifen für unwegsames Gelände, der folgendes aufweist:
eine Lauffläche (22);
ein Paar von Wülsten (26);
eine Karkasse (28; 68), die sich auf und zwischen einer von den Wülsten (26) und der anderen von den Wülsten (26) und entlang der Lauffläche (22) und einwärts von der Lauffläche (22) in einer radialen Richtung erstreckt; und
ein Band (30; 70; 130), das auf die Karkasse (28; 68) laminiert ist und sich einwärts von der Lauffläche (22) in der radialen Richtung befindet, wobei
die Lauffläche (22) eine große Anzahl von Blöcken aufweist, die im Wesentlichen in der radialen Richtung auswärts stehen,
die Karkasse (28; 68) ein Karkassengewebe (50) aufweist, das um jede Wulst herum umgeschlagen ist,
das Karkassengewebe (50) einen Hauptabschnitt (52), der sich von einer Äquatorebene zu jeder Wulst hin erstreckt; und ein Paar von umgeschlagenen Abschnitten (54; 84; 154) aufweist, die sich von dem Hauptabschnitt (52) im Wesentlichen in der radialen Richtung auswärts erstrecken,
das Band (30; 70; 130) eine Bandschnur aufweist, die spiralförmig entlang einer Umfangsrichtung gewickelt ist, und
ein Endabschnitt des Bands (30; 70; 130) und ein Endabschnitt des umgeschlagenen Abschnitts (54; 84; 154) einander an der Innenseite der Lauffläche (22) in der radialen Richtung überlappen,
**dadurch gekennzeichnet, dass**
sich eine Position (PE) von einem Ende des umgeschlagenen Abschnitts (54; 84; 154) in der Umfangsrichtung ändert.

2. Motorradreifen für unwegsames Gelände nach Anspruch 1, wobei dann, wenn ein Abstand zwischen dem Ende des umgeschlagenen Abschnitts (54; 84; 154) und einem Ende des Bands (30; 70; 130) durch d angegeben ist und ein Durchschnitt eines maximalen Werts und eines minimalen Werts des Abstands d als ein Betrag einer Überlappung L von dem Endabschnitt des Bands (30; 70; 130) und dem Endabschnitt des umgeschlagenen Abschnitts eingestellt ist, ein Verhältnis (L/D) des Betrags einer Überlappung L relativ zu einer Breite D von dem Band (30; 70; 130) in einer axialen Richtung gleich wie oder größer als 1/12 ist, aber gleich wie oder geringer als 1/6 ist.

3. Motorradreifen für unwegsames Gelände nach Anspruch 1, wobei dann, wenn eine Position an dem Ende des umgeschlagenen Abschnitts (54), an dem ein Abstand d zwischen dem Ende des umgeschlagenen Abschnitts (54) und einem Ende des Bands (30) an dessen Maximum ist, ein Punkt A1 ist und eine Position an dem Ende des umgeschlagenen Abschnitts (54), der benachbart zu dem Punkt A1 ist und an dem der Abstand d an dessen Minimum ist, ein Punkt A2 ist, ein Winkel θ einer geraden Linie, die durch ein Verbinden des Punkts A1 mit dem Punkt A2 erlangt wird, relativ zu der Umfangsrichtung gleich wie oder größer als 15° ist, aber gleich wie oder weniger als 60° ist.

4. Motorradreifen für unwegsames Gelände nach Anspruch 1, wobei der Endabschnitt des umgeschlagenen Abschnitts (54; 84; 154) sich auswärts von dem Endabschnitt des Bands (30; 70; 130) in der radialen Richtung befindet.

5. Motorradreifen für unwegsames Gelände nach Anspruch 1, wobei ein Abstand W zwischen dem Ende des umgeschlagenen Abschnitts (54; 84; 154) und einem Schnittpunkt K von dem Band (30; 70; 130) und einer geraden Linie, die durch ein Verlängern einer Innenseitenfläche eines Blocks in einer axialen Richtung erlangt wird, der an einem äußersten Abschnitt in der axialen Richtung steht, gleich wie oder größer als 2,0 mm ist.

6. Motorradreifen für unwegsames Gelände nach Anspruch 2, wobei dann, wenn eine Position, an der jede Seitenfläche eines Blocks, der an einem äußersten Abschnitt in der axialen Richtung steht, das Band (30; 70; 130) oder den umgeschlagenen Abschnitt (54; 84; 154) schneidet, wenn sie in der radialen Richtung im Wesentlichen einwärts verlängert wird, als eine virtuelle Linie angegeben ist, eine Position an dem Ende des umgeschlagenen Abschnitts (54; 84; 154), an der der Abstand d an dessen Maximum ist, eingestellt ist, um sich innerhalb eines Bereichs zu befinden, der durch die virtuelle Linie definiert ist.

## Revendications

1. Pneu de motocyclette pour terrain accidenté comprenant :
une bande de roulement (22) ;
une paire de talons (26) ;
une carcasse (28 ; 68) s'étendant sur et entre l'un des talons (26) et l'autre des talons (26), et le long de la bande de roulement (22) et vers l'intérieur de la bande de roulement (22) dans une direction radiale ; et
une bande (30; 70 ; 130) stratifiée sur la carcasse (28 ; 68) et positionnée vers l'intérieur de la bande de roulement (22) dans la direction radiale, dans lequel :
la bande de roulement (22) comprend un grand nombre de blocs qui se trouvent sensiblement vers l'extérieur dans la direction radiale,
la carcasse (28 ; 68) comprend une nappe de carcasse (50) qui est retournée autour de chaque talon,
la nappe de carcasse (50) comprend une partie principale (52) qui s'étend à partir d'un plan d'équateur vers chaque talon ; et une paire de parties retournées (54 ; 84 ; 154) qui s'étend à partir de la partie principale (52) sensiblement vers l'extérieur dans la direction radiale,
la bande (30 ; 70 ; 130) comprend une corde de bande qui est enroulée, de manière hélicoïdale, le long d'une direction circonférentielle, et
une partie d'extrémité de la bande (30 ; 70 ; 130) et une partie d'extrémité de la partie retournée (54 ; 84 ; 154) se chevauchent au niveau d'un côté interne, dans la direction radiale, de la bande de roulement (22),
**caractérisé en ce que** :
une position (PE) d'une extrémité de la partie retournée (54 ; 84 ; 154) varie dans la direction circonférentielle.

2. Pneu de motocyclette pour terrain accidenté selon la revendication 1, dans lequel, lorsqu'une distance entre l'extrémité de la partie retournée (54; 84; 154) et une extrémité de la bande (30 ; 70 ; 130) est indiquée par d et qu'une moyenne d'une valeur maximum et d'une valeur minimum de la distance d est déterminée comme étant une quantité de chevauchement L de la partie d'extrémité de la bande (30 ; 70 ; 130) et la partie d'extrémité de la partie retournée, un rapport (L/D) de la quantité de chevauchement L par rapport à une largeur D, dans une direction axiale, de la bande (30 ; 70 ; 130) est égal ou supérieur à 1/12 mais égal ou inférieur à 1/6.

3. Pneu de motocyclette pour terrain accidenté selon la revendication 1, dans lequel, lorsqu'une position sur l'extrémité de la partie retournée (54) à laquelle une distance d entre l'extrémité de la partie retournée (54) et une extrémité de la bande (30) est à son maximum, est un point A1 et qu'une position sur l'extrémité de la partie retournée (54) qui est adjacente au point A1 et à laquelle la distance d est à son minimum, est un point A2, un angle θ d'une ligne droite obtenue en raccordant le point A1 au point A2, par rapport à la direction circonférentielle, est égal ou supérieur à 15°, mais égal ou inférieur à 60°.

4. Pneu de motocyclette pour terrain accidenté selon la revendication 1, dans lequel la partie d'extrémité de la partie retournée (54 ; 84 ; 154) est positionnée à l'extérieur par rapport à la partie d'extrémité de la bande (30 ; 70 ; 130) dans la direction radiale.

5. Pneu de motocyclette pour terrain accidenté selon la revendication 1, dans lequel une distance W entre l'extrémité de la partie retournée (54 ; 84 ; 154) et une intersection K de la bande (30 ; 70 ; 130) et une ligne droite obtenue en prolongeant une surface latérale interne, dans une direction axiale, d'un bloc qui se trouve dans la partie la plus externe dans la direction axiale est égale ou supérieure à 2,0 mm.

6. Pneu de motocyclette pour terrain accidenté selon la revendication 2, dans lequel, lorsqu'une position à laquelle chaque surface latérale d'un bloc se trouvant dans la partie la plus externe dans la direction axiale rencontre la bande (30; 70; 130) ou la partie retournée (54; 84; 154), lorsqu'elle est prolongée sensiblement vers l'intérieur dans la direction radiale, est indiquée comme étant une ligne virtuelle, une position sur l'extrémité de la partie retournée (54 ; 84 ; 154) à laquelle la distance d est à son maximum, est déterminée pour être positionnée à l'intérieur d'une région définie par la ligne virtuelle.
